# EUROPEAN PATENT SPECIFICATION

(11) **EP 4 250 688 B1**
(45) Date of publication and mention of the grant of the patent: **09.10.2024**
(21) Application number: 22164506.2
(22) Date of filing: 25.03.2022
(51) Int. Cl.: H04L 67/12, H04L 67/56, H04L 67/52, H04L 67/00, G07C 5/00

(54) **A METHOD AND DEVICE FOR HANDLING CONNECTIONS FOR A VEHICLE IN A WORKSHOP**
VERFAHREN UND VORRICHTUNG ZUM HANDHABEN VON VERBINDUNGEN FÜR EIN FAHRZEUG IN EINER WERKSTATT
PROCÉDÉ ET DISPOSITIF DE GESTION DES CONNEXIONS POUR UN VÉHICULE DANS UN ATELIER

(43) Date of publication of application: 27.09.2023
(73) Proprietor: VOLVO TRUCK CORPORATION, 405 08 Göteborg (SE)
(72) Inventor: FINNDIN, Rustan, 434 79 Vallda (SE); VÄNTTINEN, Lauri, 02600 Espoo (FI); SHIRE, Joshua, 417 23 Göteborg (SE); GAESKEBY-MARS, Jonatan, Winston Salem, 27106 (US); NILSSON, Christofer, 437 31 Lindome (SE)
(74) Representative: Valea AB

(56) References cited:
- US-A1- 2009 281 687
- US-A1- 2014 052 329

## Description

### TECHNICAL FIELD

The invention generally relates to a workshop server, a method performed by the workshop server, a vehicle device, a method performed by the vehicle device and a vehicle. More particularly, the invention relates to handling connections for a vehicle in a workshop.

The invention can be applied in heavy-duty vehicles, such as trucks, buses, and construction equipment. Although the invention will be described with respect to a heavy-duty vehicle, the invention is not restricted to this particular vehicle, but may also be used in other vehicles such as trailers, wheel loaders, articulated haulers, excavators, backhoe loaders, passenger cars, marine vessels, working machines, etc. The term vehicle will be used herein when referring to any of the above types of vehicles.

### BACKGROUND

When a vehicle is at a workshop for service or repair, the technician needs to connect a diagnostics tool to the vehicle to perform the necessary service or repair operations. A separate cable or device is needed to establish a connection between the vehicle and the diagnostics tool. However, a cable has a limited length, and it may be in the way for the technician when he performs his operations. An alternative may be a wireless connection between the vehicle and the diagnostics tool, which is preferred for easy connectivity. However, a wireless connection exposes the vehicle to cyber security threats.

US 20140052329A1 discloses a system and method for identifying, diagnosing, maintaining and repairing a vehicle.

US 20090281687A1 discloses dynamic discovery of vehicle communication interface device.

Therefore, there is a need to at least mitigate or solve this issue.

### SUMMARY

An object of the invention is to improve handling of connections for a vehicle in a workshop.

According to a first aspect of the invention, the object is achieved by a method performed by a workshop server for handling connections for a vehicle in a workshop according to claim 1. The workshop server obtains a request for connection to the workshop server from the vehicle. The workshop server establishes a tool connection to at least one diagnostics tool to be used with the vehicle in the workshop. Upon receiving the request from the vehicle, the workshop server establishes a vehicle connection to the vehicle such that the vehicle is connected to the same workshop server as the at least one diagnostics tool and via different connections. The workshop server is known and trusted such that the vehicle connection between the vehicle and the workshop server is secure. The at least one diagnostics tool is connected to the vehicle via the workshop server. By the provision of a method as disclosed herein, the advantage of improving handling of connections for a vehicle in a workshop is provided. Since the vehicle and the diagnostics tool are connected to the same workshop server and via different connections, the risk for security threats is reduced or mitigated as compared to connecting the vehicle directly to the diagnostics tool.

According to one embodiment, the workshop server may initiate at least one of workshop tasks, software updates, calibrations, reading data and tests to be performed on the vehicle using the diagnostics tool. Hereby an improvement is achieved in that a variety of operations may be performed on the vehicle without any or with reduced risk for security threats.

According to a further embodiment, the establishment of the tool connection to the at least one diagnostics tool may be initiated by the workshop server. Since the connection is initiated by the workshop server and not by the diagnostics tool, no unknown or unauthorized diagnostics tool may connect to the workshop server. The trusted and known workshop server is in control of the tools that are connected to it. Thus, the security threat is reduced or mitigated.

According to another embodiment, the tool connection between the workshop server and the at least one diagnostics tool may be a wired or wireless tool communication link. An advantage of this may be that it provides flexibility with respect to which type of communicate link to use. The type of communication link may be tailored to the diagnostics tool that is used.

According to another embodiment, the vehicle connection between the vehicle and the workshop server may be a wired or wireless vehicle communication link. An advantage of this may be that it provides flexibility with respect to which type of communicate link to use. The type of communication link may be tailored to the diagnostics tool that is used.

According to a second aspect of the invention, the object is achieved by a workshop server for handling connections for a vehicle in a workshop according to claim 6. The workshop server is adapted to perform a method according to the first aspect. Advantages and effects of the workshop server of the second aspect are largely analogous to the advantages and effects of the method of the first aspect. Further, all embodiments of the method are applicable to and combinable with all embodiments of the workshop server, and vice versa.

According to a third aspect of the invention, the object is achieved by a method performed by a vehicle device for handling connections to a workshop server according to claim 7. The vehicle device detects that the vehicle is located inside or in close proximity to a workshop. Based on the detection, the vehicle device provides a request for connection to a workshop server associated with the workshop. The vehicle device determines that a vehicle connection to the workshop server has been established. The vehicle is connected to the same workshop server as at least one diagnostics tool to be used with the vehicle in the workshop and via different connections. The workshop server is known and trusted by the vehicle such that the vehicle connection between the vehicle and the workshop server is secure. Advantages and effects of the method of the third aspect are largely analogous to the advantages and effects of the method of the first aspect. Further, all embodiments of the method of the first aspect are applicable to and combinable with all embodiments of the method of the third aspect, and vice versa.

According to an embodiment, the vehicle device may enable at least one of workshop tasks, software updates, calibrations, reading data and tests to be performed on the vehicle using the at least one diagnostics tool that is connected to the same workshop server as the vehicle.

According to a further embodiment, the vehicle connection between the vehicle and the workshop server may be a wired or wireless communication link.

According to a fourth aspect of the invention, the object is achieved by a vehicle device for handling connections to a workshop server according to claim 10. The vehicle device is adapted to perform a method according to the third aspect. Advantages and effects of the method of the fourth aspect are largely analogous to the advantages and effects of the method of the third aspect. Further, all embodiments of the method of the third aspect are applicable to and combinable with all embodiments of the vehicle device of the fourth aspect, and vice versa.

According to a fifth aspect of the invention, the object is achieved by a vehicle according to claim 11. The vehicle comprises a vehicle device of the fourth aspect. Advantages and effects of the vehicle of the fifth aspect are largely analogous to the advantages and effects of the vehicle device of the fourth aspect. Further, all embodiments of the vehicle device of the fourth aspect are applicable to and combinable with all embodiments of the vehicle of the fifth aspect, and vice versa.

According to a sixth aspect of the invention, the object is achieved by a computer program according to claim 12. The computer program comprising program code means for performing the method of the first aspect when the program is run on a computer.

According to a seventh aspect of the invention, the object is achieved by a computer readable medium according to claim 13. The computer readable medium carries a computer program comprising program code means for performing the method of the first aspect when the program product is run on a computer.

According to an eighth aspect of the invention, the object is achieved by a computer program according to claim 14. The computer program comprises program code means for performing the method of the third aspect when the program is run on a computer.

According to a ninth aspect of the invention, the object is achieved by a computer readable medium of claim 15. The computer readable medium carries a computer program comprising program code means for performing the method of the third aspect when the program product is run on a computer.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
- Fig. 1: is a schematic diagram illustrating a vehicle system,
- Fig. 2: is a signalling diagram illustrating a method.
- Fig. 3: is a flow chart illustrating a method.
- Fig. 4: is a flow chart illustrating a method.
- Fig. 5a-5b: are schematic drawings illustrating a workshop server.
- Fig. 6a-6b: are schematic drawings illustrating a vehicle device.

The drawings are not necessarily to scale and the dimensions of certain features may have been exaggerated for the sake of clarity. Emphasis is instead placed upon illustrating the principle of the embodiments herein.

### DETAILED DESCRIPTION OF EXAMPLE EMBODIMENTS OF THE INVENTION

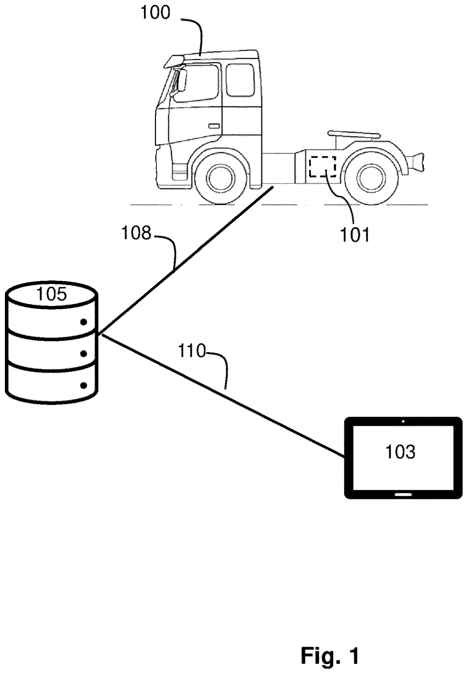

**Fig. 1** is a schematic drawing illustrating a vehicle system. The system comprises a **vehicle 100.** The vehicle 100 may be a heavy-duty vehicle such as for example a truck, bus, construction equipment. The vehicle 100 may also be other vehicles such as trailers, wheel loaders, articulated haulers, excavators, backhoe loaders, passenger cars, marine vessels, working machines, etc. For the sake of simplicity, the term vehicle will be used herein when referring to any of the above examples of vehicles.

The vehicle 100 comprises a **vehicle device 101.** The vehicle device 101 is located on-board the vehicle 100. The vehicle device 101 may be a control unit, an Electronic Control Unit (ECU), an Electronic Control Module (ECM), a vehicle computer, etc. The vehicle device 101 is adapted to have a connection to a **workshop server 105.**

The vehicle system comprises the workshop server 105. The workshop server 105 may be a workshop computer, a workshop control unit, a workshop hub, a workshop central etc. The workshop server 105 is located in a workshop where technicians may perform operations such as service and/or repair on the vehicle 100. The workshop server 105 is adapted to handle connections to the vehicle 100 via the vehicle device 101.

The workshop server 105 is arranged to establish a **vehicle connection 108** to the vehicle 100 via the vehicle device 101. The workshop server 105 is arranged to establish a **tool connection 110** to at least one **diagnostics tool 103.** The vehicle connection 108 may be a wired and/or wireless tool communication link. For example, the vehicle connection 108 may be completely wired, or it may be completely wireless, or a first part of the vehicle connection 108 may be wired between the workshop server 105 and an intermediate unit, a gateway, a hub or similar unit, and a second part of the vehicle connection 108 may be wireless between the intermediate unit, a gateway, a hub or similar unit and the vehicle 100 and the vehicle device 101 (or the other way around). The tool connection 110 may be a wired and/or wireless tool communication link. For example, the tool connection 110 may be completely wired, or it may be completely wireless, or a first part of the tool connection 110 may be wired between the workshop server 105 and an intermediate unit, a gateway, a hub or similar unit, and a second part of the tool connection 110 may be wireless between the intermediate unit, a gateway, a hub or similar unit and the diagnostics tool 103 (or the other way around).

The vehicle system comprises the at least one diagnostics tool 103. Only one diagnostics tool 103 is exemplified in fig. 1 for the sake of simplicity, but the vehicle system may comprise any suitable number of diagnostics tools 103. The diagnostics tool 103 is located at the workshop and may be operated by the technician. The diagnostics tool 103 is arranged to perform diagnostics operations on the vehicle 100, for example determining if any component in the vehicle is not functioning properly, determining if the oil in the vehicle 100 needs to be refilled or replaced, determining if a software update is necessary etc. The diagnostics tool 103 may comprise a user interface, for example in the form of a display, a touch screen etc., through which the technician may obtain information indicating the diagnostics that needs to be performed, the development of ongoing diagnostics, a result of a completed repair or service etc. The diagnostics tool 103 may be a table computer, a mobile phone, a stationary computer etc.

The diagnostics tool 103 and the workshop server 105 may be separate units, i.e. separate hardware units. The diagnostics tool 103 and the workshop server 105 may be comprised in the same unit, i.e. they may be co-located in the same hardware unit. If the diagnostics tool 103 and the workshop server 105 are comprised in the same unit, then they may be separate software units running on the same hardware unit.

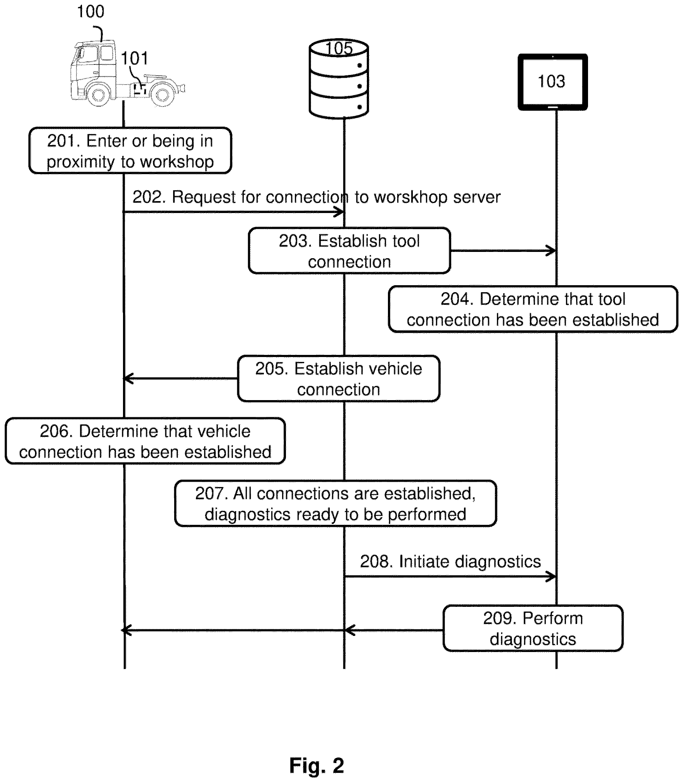

The method for handling connections for a vehicle 100 in a workshop will now be described with reference to the signalling diagram in **fig. 2****.** Prior to step 201, the vehicle 100 may have scheduled a visit for performing service or repair at the workshop. However, the visit at the workshop does not necessarily have to be scheduled in advance. The method comprises at least one of the following steps, which steps may as well be carried out in another suitable order than described below:

### Step 201

The vehicle 100 enters the workshop, i.e. it is inside the workshop, or is in close proximity to the workshop. When the vehicle 100 is in close proximity to the workshop it may be in a predetermined distance from the workshop, for example outside at the workshop's parking lot. The vehicle device 101 comprised in the vehicle 100 may detect that it is inside or in close proximity to the workshop by comparing the vehicle position with the workshop position. When the vehicle position and the workshop position are the same, or when the vehicle position is at a maximum distance from the workshop position, then the vehicle device 101 may determine that it is inside or in close proximity to the workshop. The workshop position may be known by the vehicle device 101 at some earlier instance, for example when the service or repair in the workshop has been ordered. In another example, the vehicle device 101 may establish a connection with the workshop servicer 105 when they are within a predetermined distance from each other, for example using Bluetooth technology.

The workshop server 105 is known and trusted by the vehicle device 101. For example, the vehicle device 101 may comprise a workshop server ID which it obtained when the visit to the workshop was ordered, it may be manually entered by the user of the vehicle 100 when the vehicle 100 enters or is in close proximity to the workshop, or at some other suitable time instance.

### Step 202

When the vehicle 100 has entered or is in close proximity to the workshop, the vehicle device 101 sends a request for a vehicle connection 108 to the workshop server 105. A vehicle ID may be comprised in the request. The request may be initiated by the technician, the user, owner or operator of the vehicle 100, or by the vehicle device 101.

### Step 203

The workshop server 105 may comprise or have access to information about the vehicle 100 and the operations to be performed on the vehicle 100 when it is at the workshop. This information may be in the request that was received in step 202, or it may be provided to the workshop server 105 in advance, for example when the visit to the workshop was ordered.

When the request in step 202 has been received, the workshop server 105 knows that a diagnostics tool 103 will be used by a technician when performing the necessary operations on the vehicle 100. The workshop server 105 has knowledge of which diagnostics tools 103 that are accessible, necessary and suitable for the particular vehicle 100, and establishes a tool connection 110 to one or more of these diagnostics tools 103.

### Step 204

The diagnostics tool 103 detects that the workshop server 105 has established a tool connection 110 to it. As mentioned earlier, the tool connection 110 may be a wired and/or wireless tool communication link.

### Step 205

Based on the request in step 202, the workshop server 105 establishes a vehicle connection 108 with the vehicle 100 via the vehicle device 101. As mentioned earlier, the vehicle connection 108 may be a wired and/or wireless tool communication link.

The establishment of the tool connection 110 and the vehicle connection 108 may be performed in any suitable order. For example, the tool connection 110 may be established first, and then the vehicle connection 108 may be established, or the other way around. The tool connection 110 and the vehicle connection 108 may be established at the same time.

### Step 206

The vehicle device 101 determines that the requested vehicle connection 108 has been established. The vehicle device 101 has now a vehicle connection 108 to the workshop server 105 which is known and trusted by the vehicle device 101. The vehicle device 101 may comprise or have access to a workshop ID through which the workshop server 105 is considered to be known and trusted. The vehicle 100 is thereby connected to the same workshop server as the diagnostics tool 103, but via different connections.

### Step 207

The workshop server 105 determines that all the necessary connections have been established and are up and running, and the diagnostics of the vehicle 100 is therefore ready to be performed.

### Step 208

The workshop server 105 may initiate the diagnostics to be performed by the diagnostics tool 103.

### Step 209

The diagnostics tool 103 performs the diagnostics. The diagnostics is performed via the tool connection 110 from the diagnostics tool 103 to the workshop server 105, and via the vehicle connection 108 between the workshop server 105 and the vehicle 100. Thus, the communication between the diagnostics tool 103 and the vehicle 100 goes via the workshop server 105. There is no direct communication between the diagnostics tool 103 and the vehicle 100. In this way, no unauthorized diagnostics tools will have access to the vehicle 100. Thus, security of the connection to the vehicle 100 at the workshop is improved.

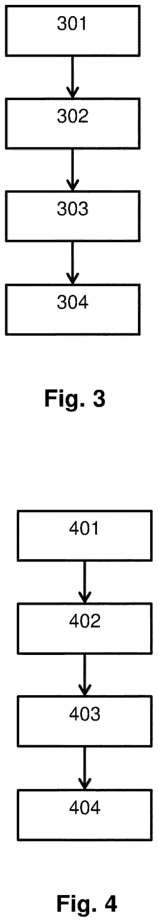

The method described above will now be described seen from the perspective of the workshop server 105. **Fig. 3** is a flow chart illustrating a method performed by the workshop server 105 for handling connections for a vehicle 100 in a workshop. The method comprises at least one of the following steps, which steps may be performed in any suitable order than described below:

### Step 301

This step corresponds to step 202 in fig. 2. The workshop server 105 obtains a request for connection to the workshop server 105 from the vehicle 100.

### Step 302

This step corresponds to step 203 in fig. 2. The workshop server 105 establishes a tool connection 110 to at least one diagnostics tool 103 to be used with the vehicle 100 in the workshop. The at least one diagnostics tool 103 is connected to the vehicle 100 via the workshop server 105. The establishment of the tool connection to the at least one diagnostics tool 103 may be initiated by the workshop server 105.

The tool connection 110 between the workshop server 105 and the at least one diagnostics tool 103 may be a wired and/or wireless tool communication link.

### Step 303

This step corresponds to step 205 in fig. 2. Upon receiving the request from the vehicle 100, the workshop server 105 establishes a vehicle connection 108 to the vehicle 100 such that the vehicle 100 is connected to the same workshop server 105 as the at least one diagnostics tool 103 and via different connections. The workshop server 105 is known and trusted such that the vehicle connection between the vehicle 100 and the workshop server 105 is secure.

The vehicle connection 108 between the vehicle 100 and the workshop server 105 may be a wired and/or wireless vehicle communication link.

The establishment of the tool connection 110 and the vehicle connection 108 may be performed in any suitable order. For example, the tool connection 110 may be established first, and then the vehicle connection 108 may be established, or the other way around. The tool connection 110 and the vehicle connection 108 may be established at the same time.

### Step 304

This step corresponds to step 208 in fig. 2. The workshop server 105 may initiate least one of workshop tasks, software updates, calibrations, reading data and tests to be performed on the vehicle 100 using the diagnostics tool 103.

A computer program may comprise program code means for performing the steps of the method described above when the program is run on a computer. A computer readable medium may carry a computer program comprising program code means for performing the method described above when the program product is run on a computer.

The method described above will now be described seen from the perspective of the vehicle device 101. **Fig. 4** is a flow chart illustrating a method performed by the vehicle device 101 for handling connections for a vehicle 100 in a workshop. The method comprises at least one of the following steps, which steps may be performed in any suitable order than described below:

### Step 401

This step corresponds to step 201 in fig. 2. The vehicle device 101 detects that the vehicle 100 is located inside or in close proximity to a workshop.

### Step 402

This step corresponds to step 202 in fig. 2. Based on the detection, the vehicle device 101 provides a request for connection to a workshop server 105 associated with the workshop.

### Step 403

This step corresponds to step 206 in fig. 2. The vehicle device 101 determines that a vehicle connection 108 to the workshop server 105 has been established. The vehicle 100 is connected to the same workshop server 105 as at least one diagnostics tool 103 to be used with the vehicle 100 in the workshop and via different connections. The workshop server 105 is known and trusted by the vehicle 100 such that the vehicle connection 108 between the vehicle 100 and the workshop server 105 is secure.

The vehicle connection 108 between the vehicle 100 and the workshop server 105 may be a wired and/or wireless communication link.

### Step 404

This step corresponds to step 209 in fig. 2. The vehicle device 101 enables at least one of workshop tasks, software updates, calibrations, reading data and tests to be performed on the vehicle 100 using the at least one diagnostics tool 103 that is connected to the same workshop server 105 as the vehicle 100, but via a different connection.

A computer program may comprise program code means for performing the steps of the method described above when the program is run on a computer. A computer readable medium may carry a computer program comprising program code means for performing the method described above when the program product is run on a computer.

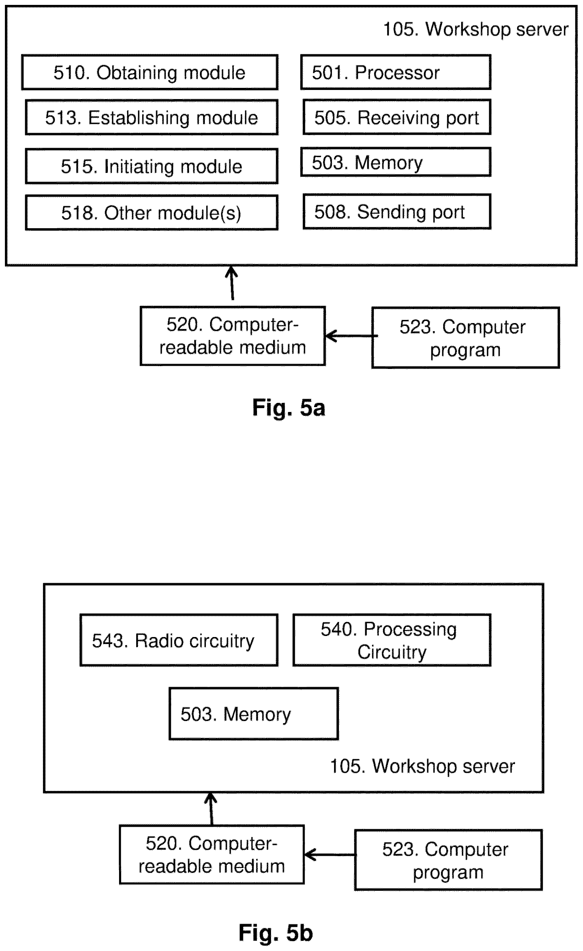

The workshop server 105 for handling connections for a vehicle 100 in a workshop is adapted to perform the method described herein. To perform the method steps shown in figs. 2-3 the workshop server 105 may comprise an arrangement as shown in **fig. 5a** and/or **fig. 5b.** Fig. 5a and fig. 5b depict two different examples of the arrangement that the workshop server 105 may comprise.

The present disclosure related to the workshop server 105 may be implemented through one or more processors, such as a **processor 501** in the workshop server 105 depicted in fig. 5a, together with computer program code for performing the functions and actions described herein. A processor, as used herein, may be understood to be a hardware component. The program code mentioned above may also be provided as a computer program product, for instance in the form of a data carrier carrying computer program code for performing the present disclosure when being loaded into the workshop server 105. One such carrier may be in the form of a CD ROM disc. It is however feasible with other data carriers such as a memory stick. The computer program code may be provided as pure program code on a server and downloaded to the workshop server 105.

The workshop server 105 may comprise a **memory 503** comprising one or more memory units. The memory 503 is arranged to be used to store obtained information, store data, configurations, schedulings, and applications etc. to perform the methods herein when being executed in the workshop server 105.

The workshop server 105 may receive information and/or data from, e.g. the vehicle 100, the vehicle device 101, the diagnostics tool 103, through a **receiving port 505.** The receiving port 505 may be, for example, connected to one or more antennas in workshop server 105. The workshop server 105 may receive information from another structure in the system through the receiving port 505. Since the receiving port 505 may be in communication with the processor 501, the receiving port 505 may then send the received information to the processor 501. The receiving port 505 may also be configured to receive other information.

The processor 501 in the workshop server 105 may be configured to transmit or send information to e.g. the vehicle 100, the vehicle device 101, the diagnostics tool 103, or another structure in the system, through a **sending port 508**, which may be in communication with the processor 501, and the memory 503.

The workshop server 105 may comprise an **obtaining module 510, an establishing module 513, an initiating module 515, and other module(s) 518** etc.

The workshop server 105 is arranged to, e.g. by means of the obtaining module 510, obtain a request for connection to the workshop server 105 from the vehicle 100. The obtaining module 510 may also be referred to as an obtaining unit, an obtaining means, an obtaining circuit, means for obtaining etc. The obtaining module 510 may be a processor 501 of the workshop server 105 or comprised in the processor 501 of the workshop server 105.

The workshop server 105 may be arranged to, e.g. by means of the establishing module 513, establish a tool connection 110 to at least one diagnostics tool 103 to be used with the vehicle 100 in the workshop. The establishment of the tool connection to the at least one diagnostics tool 103 may be initiated by the workshop server 105. The tool connection 110 between the workshop server 105 and the at least one diagnostics tool 103 may be a wired and/or wireless tool communication link. The establishing module 513 may also be referred to as an establishing unit, an establishing means, an establishing circuit, means for establishing etc. The establishing module 513 may be a processor 501 of the workshop server 105 or comprised in the processor 501 of the workshop server.

The workshop server 105 may be arranged to, e.g. by means of the establishing module 513, upon receiving the request from the vehicle 100, establish a vehicle connection 108 to the vehicle 1100 such that the vehicle 100 is connected to the same workshop server 105 as the at least one diagnostics tool 103 and via different connections. The workshop server 105 may be known and trusted such that the vehicle connection 108 between the vehicle 100 and the workshop server 105 is secure. The at least one diagnostics tool 103 may be connected to the vehicle 100 via the workshop server 105. The vehicle connection 108 between the vehicle 100 and the workshop server 105 may be a wired and/or wireless vehicle communication link.

The establishment of the tool connection 110 and the vehicle connection 108 may be performed in any suitable order. For example, the tool connection 110 may be established first, and then the vehicle connection 108 may be established, or the other way around. The tool connection 110 and the vehicle connection 108 may be established at the same time.

The workshop server 105 may be arranged to, e.g. by means of the initiating module 515, initiate at least one of workshop tasks, software updates, calibrations, reading data and tests to be performed on the vehicle 100 using the diagnostics tool 103. The initiating module 515 may also be referred to as an initiating unit, an initiating means, an initiating circuit, means for initiating etc. The initiating module 515 may be a processor 501 of the workshop server 105 or comprised in the processor 501 of the workshop server.

Those skilled in the art will also appreciate that the obtaining module 510, the establishing module 513, the initiating module 515, and the other module(s) 518 etc. described above may refer to a combination of analogue and digital circuits, and/or one or more processors configured with software and/or firmware, e.g., stored in memory, that, when executed by the one or more processors such as the processor 501, perform as described above. One or more of these processors, as well as the other digital hardware, may be comprised in a single Application-Specific Integrated Circuit (ASIC), or several processors and various digital hardware may be distributed among several separate components, whether individually packaged or assembled into a System-on-a-Chip (SoC).

The different units 510-518 described above may be implemented as one or more applications running on one or more processors such as the processor 501.

Thus, the methods described herein for the workshop server 105 may be respectively implemented by means of a **computer program 523** product, comprising instructions, i.e., software code portions, which, when executed on at least one processor 501, cause the at least one processor 501 to carry out the actions described herein, as performed by the workshop sever 105. The computer program 523 product may be stored on a **computer-readable storage medium 520.** The computer-readable storage medium 520, having stored thereon the computer program 523, may comprise instructions which, when executed on at least one processor 501, cause the at least one processor 501 to carry out the actions described herein, as performed by the workshop server 105. The computer-readable storage medium 520 may be a non-transitory computer-readable storage medium, such as a CD ROM disc, or a memory stick. The computer program 523 product may be stored on a carrier containing the computer program 523 just described, wherein the carrier is one of an electronic signal, optical signal, radio signal, or the first computer-readable storage medium 520, as described above.

The workshop server 105 may comprise a communication interface configured to facilitate communications between the workshop server 105 and other units, systems or devices, e.g., the vehicle 100, the vehicle device 101, the diagnostics tool 103 or another structure. The interface may comprise a transceiver configured to transmit and receive radio signals over an air interface in accordance with a suitable standard.

The workshop sever 105 may comprise the following arrangement depicted in fig. 5b. The workshop server 105 may comprise a **processing circuitry 540,** e.g., one or more processors such as the processor 501, in the workshop sever 105 and the memory 503. The workshop server 105 may also comprise a **radio circuitry 543,** which may comprise e.g., the receiving port 505 and the sending port 508 The processing circuitry 540 may be configured to, or operable to, perform the method actions according to figs. 2-3, in a similar manner as that described in relation to fig. 5a. The radio circuitry 543 may be configured to set up and maintain at least a wireless connection with the workshop server 105. Circuitry may be understood herein as a hardware component.

Hence, the present disclosure also relates to the workshop server 105 arranged for handling connections for a vehicle 100 in a workshop. The workshop server 105 may comprise the processing circuitry 540 and the memory 503. The memory 503 comprises instructions executable by said processing circuitry 540. The workshop server 105 is operative to perform the actions described herein in relation to the workshop server 105, e.g., in figs. 2-3.

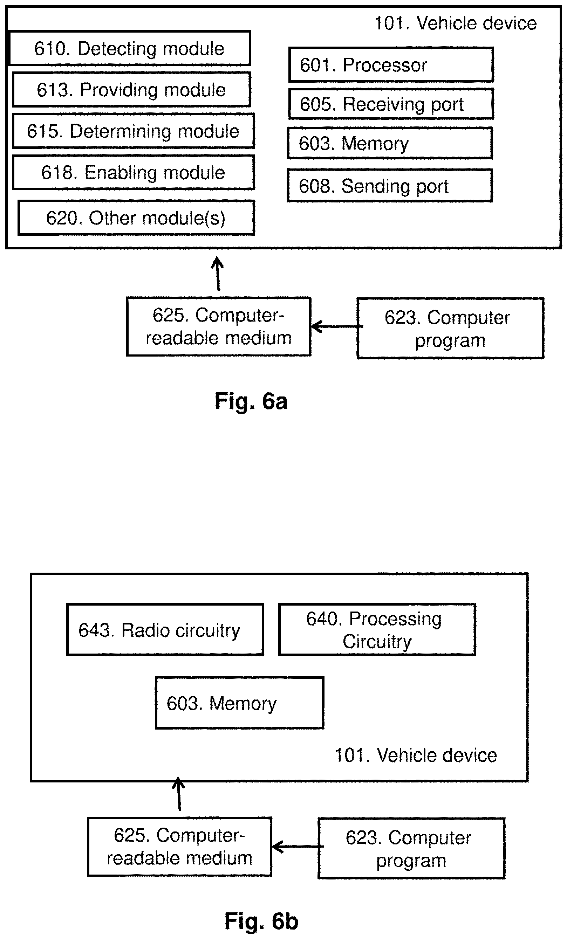

The vehicle device 101 for handling connections for a vehicle 100 in a workshop is adapted to perform the method described herein. To perform the method steps shown in figs. 2 and 4 the vehicle device 101 may comprise an arrangement as shown in **fig. 6a** and/or **fig. 6b.** Fig. 6a and fig.6b depict two different examples of the arrangement that the vehicle device 101 may comprise.

The present disclosure related to the vehicle device 101 may be implemented through one or more processors, such as a **processor 601** in the vehicle device 101 depicted in fig. 6a, together with computer program code for performing the functions and actions described herein. A processor, as used herein, may be understood to be a hardware component. The program code mentioned above may also be provided as a computer program product, for instance in the form of a data carrier carrying computer program code for performing the present disclosure when being loaded into the workshop server 105. One such carrier may be in the form of a CD ROM disc. It is however feasible with other data carriers such as a memory stick. The computer program code may be provided as pure program code on a server and downloaded to the vehicle device 101.

The vehicle device 101 may comprise a **memory 603** comprising one or more memory units. The memory 603 is arranged to be used to store obtained information, store data, configurations, schedulings, and applications etc. to perform the methods herein when being executed in the vehicle device 101.

The vehicle device 101 may receive information and/or data from, e.g. the vehicle 100, the diagnostics tool 103, the workshop server 105, through a **receiving port 605.** The receiving port 605 may be, for example, connected to one or more antennas in the vehicle device 101. The vehicle device 101 may receive information from another structure in the system through the receiving port 605. Since the receiving port 605 may be in communication with the processor 601, the receiving port 605 may then send the received information to the processor 601. The receiving port 605 may also be configured to receive other information.

The processor 601 in the vehicle device 101 may be configured to transmit or send information to e.g. the vehicle 100, the workshop server 105, the diagnostics tool 103, or another structure in the system, through a **sending port 608,** which may be in communication with the processor 601, and the memory 603.

The vehicle device 101 may comprise a **detecting module 610, a providing module 613, a determining module 615, an enabling module 618 and other module(s) 620** etc.

The vehicle device 101 is arranged to, e.g. by means of the detecting module 610, detect that the vehicle 100 is located inside or in close proximity to a workshop. The detecting module 610 may also be referred to as a detecting unit, a detecting means, a detecting circuit, means for detecting etc. The detecting module 610 may be a processor 601 of the vehicle device 101 or comprised in the processor 601 of the vehicle device 101.

The vehicle device 101 is arranged to, e.g. by means of the providing module 613, based on the detection, provide a request for connection to a workshop server 105 associated with the workshop. The providing module 613 may also be referred to as a providing unit, a providing means, a providing circuit, means for providing etc. The providing module 613 may be a processor 601 of the vehicle device 101 or comprised in the processor 601 of the vehicle device 101.

The vehicle device 101 is arranged to, e.g. by means of the determining module 615, determine that a vehicle connection 108 to the workshop server 105 has been established. The vehicle 100 is connected to the same workshop server 105 as at least one diagnostics tool 103 to be used with the vehicle 100 in the workshop and via different connections. The workshop server 105 is known and trusted by the vehicle 100 such that the vehicle connection 108 between the vehicle 100 and the workshop server 105 is secure. The vehicle connection 108 between the vehicle 100 and the workshop server 105 may be a wired and/or wireless communication link. The determining module 615 may also be referred to as a determining unit, a determining means, a determining circuit, means for determining etc. The determining module 615 may be a processor 601 of the vehicle device 101 or comprised in the processor 601 of the vehicle device 101.

The vehicle device 101 may be arranged to, e.g. by means of the enabling module 618, enable at least one of workshop tasks, software updates, calibrations, reading data and tests to be performed on the vehicle 100 using the at least one diagnostics tool 103 that is connected to the same workshop server 105 as the vehicle 100. The enabling module 618 may also be referred to as an enabling unit, an enabling means, an enabling circuit, means for enabling etc. The enabling module 618 may be a processor 601 of the vehicle device 101 or comprised in the processor 601 of the vehicle device 101.

Those skilled in the art will also appreciate that the detecting module 610, the providing module 613, the determining module 615, the enabling module 618 and the other module(s) 620 etc. described above may refer to a combination of analogue and digital circuits, and/or one or more processors configured with software and/or firmware, e.g., stored in memory, that, when executed by the one or more processors such as the processor 601, perform as described above. One or more of these processors, as well as the other digital hardware, may be comprised in a single Application-Specific Integrated Circuit (ASIC), or several processors and various digital hardware may be distributed among several separate components, whether individually packaged or assembled into a System-on-a-Chip (SoC).

The different units 610-620 described above may be implemented as one or more applications running on one or more processors such as the processor 601.

Thus, the methods described herein for the vehicle device 101 may be respectively implemented by means of a **computer program 623** product, comprising instructions, i.e., software code portions, which, when executed on at least one processor 601, cause the at least one processor 601 to carry out the actions described herein, as performed by the workshop sever 105. The computer program 623 product may be stored on a **computer-readable storage medium 625.** The computer-readable storage medium 625, having stored thereon the computer program 623, may comprise instructions which, when executed on at least one processor 601, cause the at least one processor 601 to carry out the actions described herein, as performed by the vehicle device 101. The computer-readable storage medium 625 may be a non-transitory computer-readable storage medium, such as a CD ROM disc, or a memory stick. The computer program 623 product may be stored on a carrier containing the computer program 623 just described, wherein the carrier is one of an electronic signal, optical signal, radio signal, or the first computer-readable storage medium 625, as described above.

The vehicle device 101 may comprise a communication interface configured to facilitate communications between the workshop server 105 and other units, systems or devices, e.g., the vehicle 100, the workshop server 105, the diagnostics tool 103 or another structure. The interface may comprise a transceiver configured to transmit and receive radio signals over an air interface in accordance with a suitable standard.

The vehicle device 101 may comprise the following arrangement depicted in fig. 6b. The vehicle device 101 may comprise a **processing circuitry 640**, e.g., one or more processors such as the processor 601, in the vehicle device 101 and the memory 603. The vehicle device 101 may also comprise a **radio circuitry 643**, which may comprise e.g., the receiving port 605 and the sending port 608. The processing circuitry 640 may be configured to, or operable to, perform the method actions according to figs. 2 and 4, in a similar manner as that described in relation to fig. 6a. The radio circuitry 643 may be configured to set up and maintain at least a wireless connection with the vehicle device 101. Circuitry may be understood herein as a hardware component.

Hence, the present disclosure also relates to the vehicle device 101 arranged for handling connections for a vehicle 100 in a workshop. The vehicle device 101 may comprise the processing circuitry 640 and the memory 603. The memory 603 comprises instructions executable by said processing circuitry 640. The vehicle device 101 is operative to perform the actions described herein in relation to the workshop server 105, e.g., in figs. 2 and 4.

The vehicle 100 comprising a vehicle device 101 as described above.

Summarized, the vehicle 100 is automatically connected to the same workshop server 105 as the diagnostics tools 103 in the workshop. The vehicle 100 connects to a known and trusted network instead of a single tool or device. The technician's diagnostics tools 103 are not directly connected to the vehicle 100. The connection is initiated by the vehicle and the network is known. This is more secure than connecting the truck directly to different tools or devices. The secure connection enables not only diagnostics work but other operations and activities in the workshop as well, like software updates, calibrations and tests.

It is to be understood that the present invention is not limited to the embodiments described above and illustrated in the drawings; rather, the skilled person will recognize that many changes and modifications may be made within the scope of the appended claims.

## Claims

1. A method performed by a workshop server (105) for handling connections for a vehicle (100) in a workshop, the method comprises:
*obtaining* (202, 301) a request for connection to the workshop server (105) from the vehicle (100);
*establishing* (203, 302) a tool connection (110) to at least one diagnostics tool (103) to be used with the vehicle (100) in the workshop;
upon receiving the request from the vehicle (100), *establishing* (205, 303) a vehicle connection (108) to the vehicle (100) such that the vehicle (100) is connected to the same workshop server (105) as the at least one diagnostics tool (103) and via different connections, wherein the workshop server (105) is known and trusted such that the vehicle connection between the vehicle (100) and the workshop server (105) is secure, and
wherein the at least one diagnostics tool (103) is connected to the vehicle (100) via the workshop server (105).

2. The method according to claim 1, comprising:
*initiating* (208, 304) at least one of workshop tasks, software updates, calibrations, reading data and tests to be performed on the vehicle (100) using the diagnostics tool (103).

3. The method according to any of the preceding claims, wherein establishment of the tool connection to the at least one diagnostics tool (103) is initiated by the workshop server (105).

4. The method according to any of the preceding claims, wherein the tool connection (110) between the workshop server (105) and the at least one diagnostics tool (103) is a wired and/or wireless tool communication link.

5. The method according to any of the preceding claims, wherein the vehicle connection (108) between the vehicle (100) and the workshop server (105) is a wired and/or wireless vehicle communication link.

6. A workshop server (105) for handling connections for a vehicle (100) in a workshop, the workshop server (105) being adapted to perform a method according to any of claims 1-5.

7. A method performed by a vehicle device (101) for handling connections to a workshop server (105), the method comprising:
*detecting* (401) that the vehicle (100) is located inside or in close proximity to a workshop;
based on the detection, *providing* (402) a request for connection to a workshop server (105) associated with the workshop; and
*determining* (403) that a vehicle connection (108) to the workshop server (105) has been established,
wherein the vehicle (100) is connected to the same workshop server (105) as at least one diagnostics tool (103) to be used with the vehicle (100) in the workshop and via different connections; and
wherein the workshop server (105) is known and trusted by the vehicle (100) such that the vehicle connection (108) between the vehicle (100) and the workshop server (105) is secure.

8. The method according to claim 7, comprising:
*enabling* (404) at least one of workshop tasks, software updates, calibrations, reading data and tests to be performed on the vehicle (100) using the at least one diagnostics tool (103) that is connected to the same workshop server (105) as the vehicle (100).

9. The method according to any of claims 7-8, wherein the vehicle connection (108) between the vehicle (100) and the workshop server (105) is a wired and/or wireless communication link.

10. A vehicle device (101) for handling connections to a workshop server (105), the vehicle device (101) being adapted to perform a method according to any of claims 7-9.

11. A vehicle (100) comprising a vehicle device (101) according to claim 10.

12. A computer program comprising program code means for performing the steps of any of claims 1-5 when the program is run on a computer.

13. A computer readable medium carrying a computer program comprising program code means for performing the steps of any of claims 1-5 when the program product is run on a computer.

14. A computer program comprising program code means for performing the steps of any of claims 7-9 when the program is run on a computer.

15. A computer readable medium carrying a computer program comprising program code means for performing the steps of any of claims 7-9 when the program product is run on a computer.

## Patentansprüche

1. Verfahren, das durch einen Werkstattserver (105) zum Handhaben von Verbindungen für ein Fahrzeug (100) in einer Werkstatt durchgeführt wird, wobei das Verfahren umfasst:
*Erhalten* (202, 301) einer Anforderung für eine Verbindung mit dem Werkstattserver (105) von dem Fahrzeug (100);
*Herstellen* (203, 302) einer Werkzeugverbindung (110) mit mindestens einem Diagnosewerkzeug (103), das mit dem Fahrzeug (100) in der Werkstatt verwendet werden soll;
nach einem Empfangen der Anforderung von dem Fahrzeug (100) *Herstellen* (205, 303) einer Fahrzeugverbindung (108) mit dem Fahrzeug (100), derart, dass das Fahrzeug (100) mit demselben Werkstattserver (105) wie das mindestens eine Diagnosewerkzeug (103) und über verschiedene Verbindungen verbunden ist, wobei der Werkstattserver (105) bekannt und vertrauenswürdig ist, derart, dass die Fahrzeugverbindung zwischen dem Fahrzeug (100) und dem Werkstattserver (105) sicher ist, und
wobei das mindestens eine Diagnosewerkzeug (103) über den Werkstattserver (105) mit dem Fahrzeug (100) verbunden ist.

2. Verfahren nach Anspruch 1, umfassend:
*Initiieren* (208, 304) mindestens eines von Werkstattaufgaben, Softwareaktualisierungen, Kalibrierungen, Lesedaten und Tests, die an dem Fahrzeug (100) unter Verwendung des Diagnosewerkzeugs (103) durchgeführt werden sollen.

3. Verfahren nach einem der vorstehenden Ansprüche, wobei eine Herstellung der Werkzeugverbindung mit dem mindestens einen Diagnosewerkzeug (103) durch den Werkstattserver (105) initiiert wird.

4. Verfahren nach einem der vorstehenden Ansprüche, wobei die Werkzeugverbindung (110) zwischen dem Werkstattserver (105) und dem mindestens einen Diagnosewerkzeug (103) ein drahtgebundener und/oder drahtloser Werkzeugkommunikationslink ist.

5. Verfahren nach einem der vorstehenden Ansprüche, wobei die Fahrzeugverbindung (108) zwischen dem Fahrzeug (100) und dem Werkstattserver (105) ein drahtgebundener und/oder drahtloser Fahrzeugkommunikationslink ist.

6. Werkstattserver (105) zum Handhaben von Verbindungen für ein Fahrzeug (100) in einer Werkstatt, wobei der Werkstattserver (105) geeignet ist, um ein Verfahren gemäß einem der Ansprüche 1 bis 5 durchzuführen.

7. Verfahren, das durch eine Fahrzeugvorrichtung (101) zum Handhaben von Verbindungen mit einem Werkstattserver (105) durchgeführt wird, das Verfahren umfassend:
*Erkennen* (401), dass sich das Fahrzeug (100) in einer Werkstatt oder in unmittelbarer Nähe einer Werkstatt befindet;
basierend auf der Erkennung *Bereitstellen* (402) einer Anforderung für die Verbindung mit einem Werkstattserver (105), der mit der Werkstatt verknüpft ist; und
*Bestimmen* (403), dass eine Fahrzeugverbindung (108) mit dem Werkstattserver (105) hergestellt wurde,
wobei das Fahrzeug (100) mit demselben Werkstattserver (105) wie mindestens ein Diagnosewerkzeug (103) und über verschiedene Verbindungen verbunden ist, das mit dem Fahrzeug (100) in der Werkstatt verwendet werden soll; und
wobei der Werkstattserver (105) dem Fahrzeug (100) bekannt und vertrauenswürdig ist, derart dass die Fahrzeugverbindung (108) zwischen dem Fahrzeug (100) und dem Werkstattserver (105) sicher ist.

8. Verfahren nach Anspruch 7, umfassend:
*Aktivieren* (404) mindestens eines von Werkstattaufgaben, Softwareaktualisierungen, Kalibrierungen, Lesedaten und Tests, die an dem Fahrzeug (100) unter Verwendung des mindestens einen Diagnosewerkzeugs (103) durchgeführt werden sollen, das mit demselben Werkstattserver (105) wie das Fahrzeug (100) verbunden ist.

9. Verfahren nach einem der Ansprüche 7 bis 8, wobei die Fahrzeugverbindung (108) zwischen dem Fahrzeug (100) und dem Werkstattserver (105) ein drahtgebundener und/oder drahtloser Kommunikationslink ist.

10. Fahrzeugvorrichtung (101) zum Handhaben von Verbindungen mit einem Werkstattserver (105), wobei die Fahrzeugvorrichtung (101) geeignet ist, um ein Verfahren nach einem der Ansprüche 7 bis 9 durchzuführen.

11. Fahrzeug (100), umfassend eine Fahrzeugvorrichtung (101) nach Anspruch 10.

12. Computerprogramm, umfassend Programmcodemittel zum Durchführen der Schritte nach einem der Ansprüche 1 bis 5, wenn das Programm auf einem Computer ausgeführt wird.

13. Computerlesbares Medium, das ein Computerprogramm trägt, umfassend Programmcodemittel zum Durchführen der Schritte nach einem der Ansprüche 1 bis 5, wenn das Programmprodukt auf einem Computer ausgeführt wird.

14. Computerprogramm, umfassend Programmcodemittel zum Durchführen der Schritte nach einem der Ansprüche 7 bis 9, wenn das Programm auf einem Computer ausgeführt wird.

15. Computerlesbares Medium, das ein Computerprogramm trägt, umfassend Programmcodemittel zum Durchführen der Schritte nach einem der Ansprüche 7 bis 9, wenn das Programmprodukt auf einem Computer ausgeführt wird.

## Revendications

1. Procédé effectué par un serveur d'atelier (105) permettant de gérer des connexions pour un véhicule (100) dans un atelier, le procédé comprenant :
*l'obtention* (202, 301) d'une demande de connexion au serveur d'atelier (105) provenant du véhicule (100) ;
*l'établissement* (203, 302) d'une connexion d'outil (110) à au moins un outil de diagnostic (103) à utiliser avec le véhicule (100) dans l'atelier ;
sur réception de la demande provenant du véhicule (100), *l'établissement* (205, 303) d'une connexion de véhicule (108) au véhicule (100) de sorte que le véhicule (100) soit connecté au même serveur d'atelier (105) que l'au moins un outil de diagnostic (103) et par l'intermédiaire de connexions différentes, dans lequel le serveur d'atelier (105) est connu et fiable de sorte que la connexion de véhicule entre le véhicule (100) et le serveur d'atelier (105) soit sécurisée, et
dans lequel l'au moins un outil de diagnostic (103) est connecté au véhicule (100) par l'intermédiaire du serveur d'atelier (105).

2. Procédé selon la revendication 1, comprenant :
*le lancement* (208, 304) d'au moins l'un parmi tâches d'atelier, mises à jour de logiciel, étalonnages, données de lecture et tests à effectuer sur le véhicule (100) à l'aide de l'outil de diagnostic (103).

3. Procédé selon l'une quelconque des revendications précédentes, dans lequel l'établissement de la connexion d'outil à l'au moins un outil de diagnostic (103) est initié par le serveur d'atelier (105).

4. Procédé selon l'une quelconque des revendications précédentes, dans lequel la connexion d'outil (110) entre le serveur d'atelier (105) et l'au moins un outil de diagnostic (103) est une liaison de communication d'outil câblée et/ou sans fil.

5. Procédé selon l'une quelconque des revendications précédentes, dans lequel la connexion de véhicule (108) entre le véhicule (100) et le serveur d'atelier (105) est une liaison de communication de véhicule câblée et/ou sans fil.

6. Serveur d'atelier (105) pour gérer des connexions d'un véhicule (100) dans un atelier, le serveur d'atelier (105) étant adapté pour effectuer un procédé selon l'une quelconque des revendications 1 à 5.

7. Procédé effectué par un dispositif de véhicule (101) pour gérer des connexions à un serveur d'atelier (105), le procédé comprenant :
*la détection* (401) du fait que le véhicule (100) se trouve à l'intérieur ou à proximité d'un atelier ;
sur la base de la détection, *la fourniture* (402) d'une demande de connexion à un serveur d'atelier (105) associé à l'atelier ; et
*la détermination* (403) du fait qu'une connexion de véhicule (108) au serveur d'atelier (105) a été établie,
dans lequel le véhicule (100) est connecté au même serveur d'atelier (105) qu'au moins un outil de diagnostic (103) à utiliser avec le véhicule (100) dans l'atelier et par l'intermédiaire de connexions différentes ; et
dans lequel le serveur d'atelier (105) est connu de et considéré comme fiable par le véhicule (100) de sorte que la connexion de véhicule (108) entre le véhicule (100) et le serveur d'atelier (105) est sécurisée.

8. Procédé selon la revendication 7, comprenant :
*l'activation* (404) d'au moins l'un parmi tâches d'atelier, mises à jour de logiciel, étalonnages, lectures de données et tests sur le véhicule (100) à l'aide de l'au moins un outil de diagnostic (103) qui est connecté au même serveur d'atelier (105) que le véhicule (100).

9. Procédé selon l'une quelconque des revendications 7 à 8, dans lequel la connexion de véhicule (108) entre le véhicule (100) et le serveur d'atelier (105) est une liaison de communication câblée et/ou sans fil.

10. Dispositif de véhicule (101) pour gérer des connexions à un serveur d'atelier (105), le dispositif de véhicule (101) étant adapté pour effectuer un procédé selon l'une quelconque des revendications 7 à 9.

11. Véhicule (100) comprenant un dispositif de véhicule (101) selon la revendication 10.

12. Programme informatique comprenant un moyen de code de programme pour effectuer les étapes selon l'une quelconque des revendications 1 à 5 lorsque ledit programme est exécuté sur un ordinateur.

13. Support lisible par ordinateur contenant un programme informatique comprenant un moyen de code de programme pour effectuer les étapes selon l'une quelconque des revendications 1 à 5 lorsque le produit programme est exécuté sur un ordinateur.

14. Programme informatique comprenant un moyen de code de programme pour effectuer les étapes selon l'une quelconque des revendications 7 à 9 lorsque le programme est exécuté sur un ordinateur.

15. Support lisible par ordinateur contenant un programme informatique comprenant un moyen de code de programme pour effectuer les étapes selon l'une quelconque des revendications 7 à 9 lorsque le produit programme est exécuté sur un ordinateur.
